(19)

**Europäisches Patentamt**
**European Patent Office**
**Office européen des brevets**

(11) **EP 4 621 480 A1**

(12) **EUROPEAN PATENT APPLICATION**
published in accordance with Art. 153(4) EPC

(43) Date of publication:
**24.09.2025 Bulletin 2025/39**

(21) Application number: **22967610.1**

(22) Date of filing: **08.12.2022**

(51) International Patent Classification (IPC):
**G02B 30/27** (2020.01)    **H04N 13/302** (2018.01)

(52) Cooperative Patent Classification (CPC):
**G02B 30/27; H04N 13/302**

(86) International application number:
**PCT/CN2022/137735**

(87) International publication number:
**WO 2024/119456 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
 • **LIU, Xin
  Shenzhen, Guangdong 518129 (CN)**

 • **LI, Weiwu
  Shenzhen, Guangdong 518129 (CN)**
 • **DENG, Yali
  Shenzhen, Guangdong 518129 (CN)**
 • **YANG, Bo
  Shenzhen, Guangdong 518129 (CN)**
 • **ZHANG, Cheng
  Wuhan, Hubei 430074 (CN)**
 • **XU, Wenwei
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **THREE-DIMENSIONAL DISPLAY DEVICE AND RELATED BEAM SHAPING STRUCTURE**

(57)    A three-dimensional display device (1) includes: a light source (2), having a pixel unit array, where each pixel unit in the pixel unit array includes a plurality of sub-pixels; a stop unit array (3), including a plurality of stop units, where the plurality of stop units are in one-to-one correspondence with a plurality of sub-pixels in a plurality of pixel units, and are configured to limit a divergence angle ($\gamma$) of a light beam emitted from each sub-pixel; and a collimation and refraction array (4), including a plurality of collimation and refraction units, where the plurality of collimation and refraction units are in one-to-one correspondence with the plurality of stop units, and are configured to separately collimate and refract the light beam whose divergence angle ($\gamma$) is limited.

FIG. 3

**Description**

**TECHNICAL FIELD**

The present disclosure relates to the three-dimensional display field, and more specifically, to a three-dimensional display device and a related beam shaping structure.

**BACKGROUND**

In comparison with a two-dimensional display technology, a three-dimensional display technology can reproduce a scene of an objective world to some extent, and make people feel immersive. Therefore, the three-dimensional display technology has attracted more attention.

According to different imaging principles, three-dimensional display technologies are classified into two main types. The first type is a non-naked-eye three-dimensional display technology based on binocular parallax. However, a special device (for example, polarized glasses or a helmet) needs to be worn to view three-dimensional stereoscopic imaging. This reduces entertainment and naturalness during viewing. In addition, long-time viewing is accompanied by problems such as visual fatigue and a decrease in comfort. The second type is a naked-eye three-dimensional display technology, which requires light field adjustment and control to project light of a corresponding viewpoint to a corresponding view area. Because images of different viewpoints have parallax, visual three-dimensional (3D) effect may be formed.

**SUMMARY**

An object of the present disclosure is to provide an improved three-dimensional display device and a related beam shaping structure.

According to a first aspect of the present disclosure, a three-dimensional display device is provided. The three-dimensional display device includes: a light source, having a pixel unit array including a plurality of pixel units, where each of the plurality of pixel units includes a plurality of sub-pixels; a stop unit array, including a plurality of stop units, where the plurality of stop units are in one-to-one correspondence with a plurality of sub-pixels in the plurality of pixel units, and are configured to limit a divergence angle of a light beam emitted from each sub-pixel; and a collimation and refraction array, including a plurality of collimation and refraction units, where the plurality of collimation and refraction units are in one-to-one correspondence with the plurality of stop units, and are configured to collimate and refract the light beam limited by the stop unit array.

It will be understood that, the three-dimensional display device disclosed in the present disclosure is used, so that in comparison with a conventional solution using a collimation backlight structure, a combination of the stop unit and the collimation and refraction unit in the present disclosure is lighter and thinner.

In some embodiments, each collimation and refraction unit is a metasurface, and the metasurface includes a plurality of micro-nano structural units formed on a substrate. In these embodiments, the combination of the stop unit and the collimation and refraction unit in the present disclosure is further light and thin. In addition, the metasurface is used, so that a refraction direction of a viewpoint can be adjusted and controlled more freely, a design freedom of the viewpoint is greater, a divergence angle of a light beam is small, collimation performance is good, and crosstalk between viewpoints is small. This can effectively improve 3D display effect.

In some embodiments, each micro-nano structural unit includes a nanopillar structure.

In some embodiments, an orthographic projection of the nanopillar structure on the substrate is a C4 rotational symmetry pattern. With this nanopillar structure, phase distribution of the metasurface can be calculated more easily.

In some embodiments, a spacing between the plurality of micro-nano structural units is constant and less than 400 nm. With this spacing requirement, a design of the metasurface for a visible light wavelength may be facilitated.

In some embodiments, when the nanopillar structure is a nanocylinder structure, a diameter dimension of the nanocylinder structure is selected from a range of 50 nm to 400 nm. With this dimension requirement, a design requirement of the metasurface for the visible light wavelength is considered, and nano-fabrication is also easier to implement.

In some embodiments, the plurality of sub-pixels include a blue sub-pixel, a red sub-pixel, and a green sub-pixel. In these embodiments, the three-dimensional display device in the present disclosure may implement color three-dimensional displaying.

In some embodiments, the collimation and refraction array is designed to separately collimate light rays emitted by the plurality of sub-pixels in each pixel unit and refract the light rays to different directions, and the different directions correspond to different viewpoints of the three-dimensional display device.

In some embodiments, a material for preparing the micro-nano structural unit includes titanium oxide and silicon nitride.

In some embodiments, a height of each stop unit is designed to enable an angle at which a light ray emitted from a center point of each sub-pixel exits along a highest point of a corresponding stop unit to be not greater than 20°. With this angle limitation, a design requirement for a collimation aspect of the collimation and refraction unit such as the metasurface can be reduced.

In some embodiments, the stop unit array is made of a material with a light absorption characteristic.

In some embodiments, the material with the light absorption characteristic is a photoresist.

In some embodiments, the light source is selected from a micro light-emitting diode, a liquid crystal display, or an organic light-emitting diode.

According to a second aspect of the present disclosure, a beam shaping structure is provided. The beam shaping structure includes: a pixel-level light source; a stop unit, where the stop unit is disposed above the pixel-level light source, and is configured to limit a divergence angle of a light beam emitted from the pixel-level light source; and a refraction unit, where the refraction unit is disposed above the stop unit, and is configured to refract the light beam limited by the stop unit.

It will be understood that the beam shaping structure of the present disclosure provides an alternative beam shaping solution. The beam shaping structure also has advantage of lightness and thinness. Particularly, when the refraction unit is a metasurface, the beam shaping structure may also adjust and control a refraction direction more freely.

According to a third aspect of the present disclosure, an optical apparatus is provided. The optical apparatus includes the beam shaping structure according to the second aspect. In some embodiments, the optical apparatus is a three-dimensional display device.

According to a fourth aspect of the present disclosure, a method for preparing a three-dimensional display device is provided. The method includes: providing a light source having a pixel unit array, where the pixel unit array includes a plurality of pixel units, and each pixel unit includes a plurality of sub-pixels; arranging a stop unit array above the pixel unit array, where the stop unit array includes a plurality of stop units, and the plurality of stop units are in one-to-one correspondence with a plurality of sub-pixels in the plurality of pixel units, and are configured to limit a divergence angle of a light beam emitted from each sub-pixel; and arranging a collimation and refraction array above the stop unit array, where the collimation and refraction array includes a plurality of collimation and refraction units, and the plurality of collimation and refraction units are in one-to-one correspondence with the plurality of stop units, and are configured to separately collimate and refract the light beam limited by the stop unit array.

According to a fifth aspect of the present disclosure, a method for preparing a beam shaping structure is provided. The method includes: providing a pixel-level light source; arranging a stop unit above the pixel-level light source, and is configured to limit a divergence angle of a light beam emitted from the pixel-level light source; and arranging a refraction unit above the stop unit, and is configured to refract a direction of the light beam whose divergence angle is limited.

It should be understood that the content described in the summary is not intended to limit key or important features of embodiments of the present disclosure or limit the scope of the present disclosure. Other features of the present disclosure are readily understood through the following descriptions.

## BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.

FIG. 1 is a diagram of a principle of a conventional naked-eye 3D display solution;

FIG. 2 is a diagram of a principle of another conventional naked-eye 3D display solution;

FIG. 3 is a diagram of a partial structure of a three-dimensional display device according to an example embodiment of the present disclosure;

FIG. 4 shows an example arrangement of a light source having a pixel unit array according to an example embodiment of the present disclosure;

FIG. 5 is a geometrical diagram of a parameter related to phase distribution of a metasurface according to an example embodiment of the present disclosure;

FIG. 6 is diagram of a structural parameter of a micro-nano structural unit that is a nanocylinder structure with a substrate according to an example embodiment of the present disclosure;

FIG. 7 is a diagram of diameter distribution of a nanocylinder structure within 10×10 micro-nano structural units near a center point of a metasurface for a blue sub-pixel according to an example embodiment of the present disclosure;

FIG. 8 is a diagram of diameter distribution of a nanocylinder structure within 10×10 micro-nano structural units near a center point of a metasurface for a green sub-pixel according to an example embodiment of the present disclosure;

FIG. 9 is a diagram of diameter distribution of a nanocylinder structure within 10×10 micro-nano structural units near a center point of a metasurface for a red sub-pixel according to an example embodiment of the present disclosure;

FIG. 10 is a flowchart of a method for preparing a three-dimensional display device according to an example embodiment of the present disclosure; and

FIG. 11 is a flowchart of a method for preparing a beam shaping structure according to an example embodiment of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

As described above, the three-dimensional display field has attracted more attention. Particularly, for naked-eye three-dimensional displaying, there are various naked-eye three-dimensional display solutions.

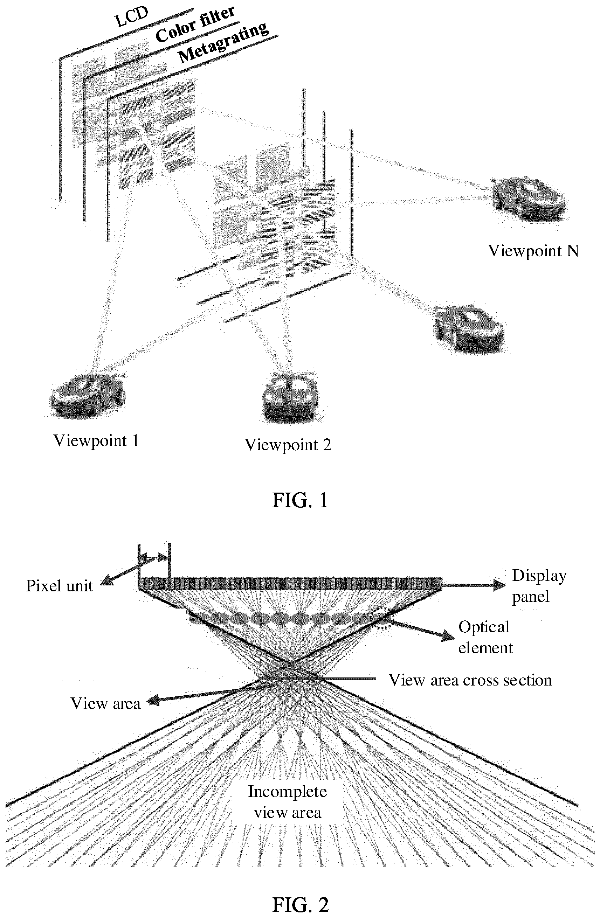

In an example, FIG. 1 is a diagram of a principle of a naked-eye 3D display solution. As shown in FIG. 1, light from different sub-pixels of an LCD may be converged to a point in space through a metagrating as a refraction element, so that a plurality of viewpoints such as a viewpoint 1 to a viewpoint N are formed. Images of these different viewpoints may further form parallax, thereby generating visual 3D effect.

In an example, FIG. 2 is a diagram of a principle of another conventional naked-eye 3D display solution. As shown in FIG. 2, a refraction element such as a lens is used to refract light emitted by sub-pixels at different locations to different angles. A light-splitting rule of the refraction element is designed, so that light of sub-pixels with same viewpoint information can be converged to a point in space, to form a plurality of viewpoints similarly. In addition, there is also a 3D display solution that achieves a same light-splitting principle as the lens in a manner of a parallax barrier.

According to a basic principle of three-dimensional displaying, it may be understood that a collimated light beam with directional refraction may form 3D display effect with low crosstalk and a large depth of field. Therefore, a most important part of a three-dimensional display design is that light needs to be collimated and refracted.

However, the inventor notes that, most of naked-eye three-dimensional display devices based on pixelization adjustment and control use a manner of combining collimated backlight and the refraction element. A collimation backlight system thereof is usually heavy, which increases a thickness of a planar display device such as a mobile phone or a computer as a three-dimensional display device; and consequently is not portable and integrated enough.

An objective of the present disclosure is to provide a light and thin design to implement collimation and refraction of a light beam, and further implement high-quality naked-eye three-dimensional display effect, so that a conventional backlight structure can be avoided. To achieve this objective, a concept of the present disclosure is to implement collimation and refraction of the light beam by using a combination of a stop unit and a collimation and refraction unit. The stop unit is configured to limit a divergence angle of a light beam from a sub-pixel of a light source, and the collimation and refraction unit is configured to refract the light beam limited by the stop unit, to implement three-dimensional display effect. Particularly, the collimation and refraction unit in the present disclosure may be a metasurface.

As known in the art, the metasurface (metasurface) is an artificial material whose size is less than an operating wavelength, and can implement flexible and effective adjustment and control on characteristics such as polarization, an amplitude, a phase, a polarization manner, and a propagation mode of an electromagnetic wave. Usually, the light beam may be shaped by adjusting and controlling phase distribution of the metasurface.

It will be understood that, in comparison with a conventional solution using a collimation backlight structure, the combination of the stop unit and the collimation and refraction unit in the present disclosure is lighter and thinner. Particularly, the combination of the stop unit and the collimation and refraction unit in the present disclosure is lighter and thinner when the metasurface is used as the collimation and refraction unit. In addition, in comparison with a conventional solution in which a conventional lens is used as a collimation and refraction unit, the metasurface is used, so that a refraction direction of a viewpoint can be adjusted and controlled more freely, a design freedom of the viewpoint is greater, a divergence angle of a light beam is small, collimation performance is good, and crosstalk between viewpoints is small. This can effectively improve 3D display effect. In addition, a combination of the metasurface and the stop unit may also enable light emitted by sub-pixels with a same width to form small broadening of a viewpoint at a viewing distance, that is, the crosstalk is small, and a depth of field is large. In addition, in comparison with a case in which the conventional lens forms a repeated view area in space, there is a jump area in a switching part of the view area, and a reverse vision phenomenon occurs, the combination of the metasurface and the stop unit can also avoid the above disadvantages.

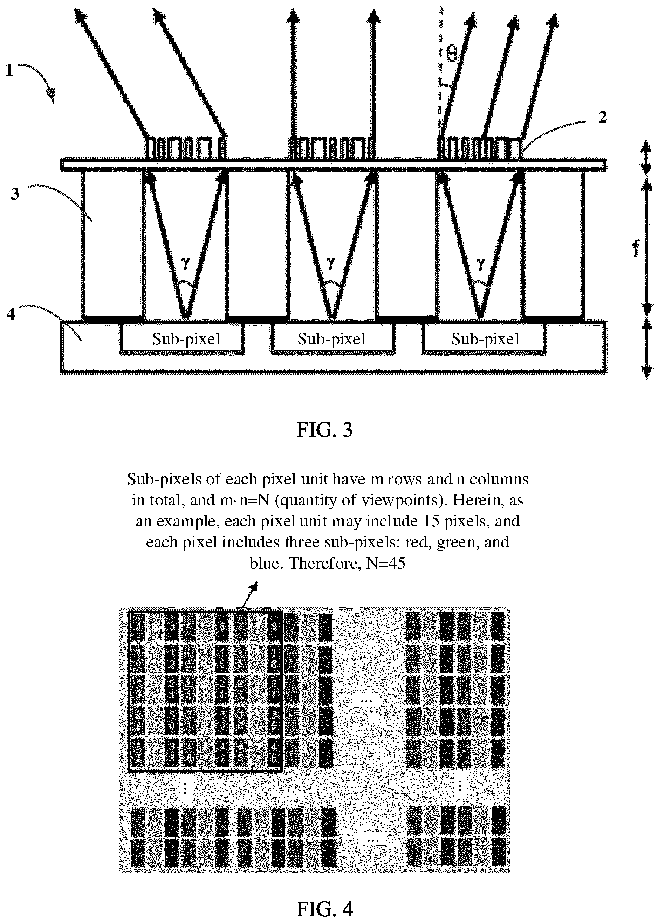

In the following, FIG. 3 is a diagram of a partial structure of a three-dimensional display device according to an example embodiment of the present disclosure.

It should be understood that the three-dimensional display device in the present disclosure is a naked-eye three-dimensional display device, may be any appropriate type of display, and includes but is not limited to a mobile phone, a tablet computer, a desktop computer, and a personal digital assistant (PDA).

As shown in FIG. 3, a three-dimensional display apparatus 1 in the present disclosure may include a light source 2, a stop unit array 3, and a collimation and refraction array 4.

A function of the light source 2 is to provide image information, and the light source 2 may be, for example, a micro light-emitting diode (micro-LED), a liquid crystal display (LCD), or an organic light-emitting diode (OLED).

It should be understood that, to implement three-dimensional display pixelization adjustment and control, the light source 2 may be designed to have a pixel unit array. The pixel unit array includes a plurality of pixel units, and each pixel unit may include a plurality of sub-pixels, for example, a plurality of groups that each include three alternately arranged sub-pixels: red, green, and blue (RGB). Further, the light source 2 may provide, through the foregoing pixel unit array, image information used for three-dimensional displaying.

FIG. 4 shows an example arrangement of a light source having a pixel unit array according to an example embodiment of the present disclosure. By way of example only, as shown in FIG. 4, each pixel unit may include, for example, 45 sub-pixels, and may include, for example, 15 pixels, and each pixel includes three alternately arranged sub-pixels: red, green, and blue (RGB).

It should be noted herein that the term "pixel unit" in the present disclosure may be defined as a combination of a plurality of sub-pixels, and may include one pixel or a plurality of pixels. For example, when each pixel usually includes three alternately arranged sub-pixels: red, green, and blue (RGB), each pixel unit may include one or more such pixels. In addition, although three sub-pixels: RGB, are used as an example to describe composition of each pixel herein, this is not limited. It is possible that each pixel includes more or fewer sub-pixels, or even includes only one sub-pixel (it is noted that in this case, the pixel may be understood as a special sub-pixel). In addition, the pixel unit or the pixel does not necessarily include a colorful sub-pixel, and it is also possible that the pixel unit or the pixel includes a plurality of sub-pixels of a same color. In addition, the arrangement of the three alternately arranged sub-pixels: red, green, and blue (RGB) in FIG. 4 is merely an example. In another embodiment, there may be another arrangement form that is completely different from the arrangement of the three alternately arranged sub-pixels: red, green, and blue (RGB) in FIG. 4. It should be understood that, when the pixel unit includes sub-pixels of different colors, the three-dimensional display device may form color three-dimensional display; or when the pixel unit includes sub-pixels of a same color, the three-dimensional display device presents monochrome three-dimensional displaying.

It should be further understood that a quantity of sub-pixels included in each pixel unit is designed based on a quantity of viewpoints generated by the three-dimensional display device. Therefore, a larger quantity of viewpoints designed by the three-dimensional display device indicates a larger quantity of sub-pixels in each pixel unit. Further, according to a generation principle of a viewpoint of three-dimensional displaying, a quantity and locations of sub-pixels in different pixel units need to be correspondingly consistent, and light emitted by corresponding sub-pixels in different pixel units needs to be converged to a same point in space at a predetermined distance, so that a plurality of viewpoints corresponding to the quantity of sub-pixels can be generated in space.

For example, the sub-pixels in each pixel unit in FIG. 4 may be numbered from 1 to 45. The 1st, 4th, 7th, 10th, ... correspond to red sub-pixels, the 2nd, 5th, 8th, 11th, ... correspond to green sub-pixels, and the 3rd, 6th, 9th, 12th, ... correspond to blue sub-pixels. The 1st, 2nd, and 3rd sub-pixels may be sub-pixels in the 1st pixel, the 4th, 5th, and 6th pixels may be sub-pixels in the 2nd pixel, and so on. In this case, light emitted by sub-pixels with corresponding numbers in different pixel units (for example, a sub-pixel whose number is 1 in the 1st pixel unit and a sub-pixel whose number is 1 in an Mth pixel unit) is converged to a same point in space, so that a quantity of viewpoints, for example, 45 viewpoints, corresponding to the quantity of sub-pixels in each pixel unit can be generated.

When a naked eye of a user receives at least some viewpoints in the plurality of viewpoints, because images received at different viewpoints have parallax, the user may see three-dimensional display effect with the naked eye. It may be further understood that, in an actual design of a three-dimensional device, a refraction direction of light emitted by a sub-pixel included in each pixel unit may be designed based on a spatial location of a viewpoint that needs to be designed.

A function of the stop unit array 3 is to limit a divergence angle of a light beam emitted from each sub-pixel. Therefore, according to the design of the present disclosure, the stop unit array 3 is arranged above the foregoing pixel unit array, and may include a plurality of stop units. Further, the plurality of stop units are arranged in one-to-one correspondence with the plurality of sub-pixels, and are configured to limit the divergence angle of the light beam emitted from each sub-pixel. It should be noted herein that, as well known in the art, a stop is an entity that plays a limiting role in light in an optical system. The "stop unit" in this application may be defined as an aperture structure that limits light generated by the light source (including a pixel-level light source such as a pixel or a sub-pixel). For example, in FIG. 3, three sub-pixels correspondingly have three stop units, and adjacent stop units (or aperture structures) may share a boundary. It is easy to understand that it is also possible that the stop units do not share the boundary.

To avoid crosstalk of light beams emitted from different sub-pixels (especially adjacent sub-pixels), in some embodiments, the stop unit array 3 is arranged to be made of a material with a light absorption characteristic. By way of example only, the material with the light absorption characteristic may include a photoresist having a light absorption property. In some other embodiments, it is also possible that the stop unit array 3 is made of a reflective material.

In some embodiments, a height of each stop unit may be designed to enable an angle y at which a light ray emitted from a center point of each sub-pixel exits along a highest point of a corresponding stop unit to be not greater than a predetermined value, for example, not greater than 20°, 15°, or 10°. The term "highest point" needs to be defined as a highest point, of the stop unit, that can be seen from an angle of view of the center point of the corresponding sub-pixel. FIG. 3 shows an example of the angle γ. In this way, a strict constraint may be imposed on the divergence angle of the light beam emitted from each stop unit. Herein, it should be understood that a point light source such as an LED is usually a Lambertian light source, and emits light with Lambertian distribution. The foregoing predetermined constraint manner of the stop unit on the divergence angle may reduce a requirement for the light beam emitted by the light source, and is subsequently combined with the collimation and refraction unit, so that it possible to omit a conventional collimation backlight system.

A function of the collimation and refraction array 4 is to collimate a light beam, with a predetermined divergence angle (where for example, an emission angle is not greater than 20°, 15°, or 10°), emitted from each stop unit in the stop unit array 3 and refract the light beam to a predetermined direction in space. Specifically, according to the design of the present disclosure, the collimation and refraction array 4 may be arranged above the stop unit array 3, and includes a plurality of collimation and refraction units, and the plurality of collimation and refraction units may be in one-to-one correspondence with the plurality of stop units, to separately collimate a corresponding light beam whose divergence angle is limited and refract the light beam to the predetermined direction. For example, as shown in FIG. 3, light beams that are emitted by different sub-pixels in each pixel and whose divergence angles are limited may be collimated and refracted to different predetermined directions in space.

In some embodiments, the collimation and refraction array 4 may be, for example, a microlens or a grating structure. However, particularly, each collimation and refraction unit in the collimation and refraction array 4 in the present disclosure may be a metasurface, and the metasurface includes a plurality of micro-nano structural units formed on a substrate. As an example, the substrate may be made of, for example, a transparent material such as glass, and the metasurface may be made of a material, for example, titanium oxide and silicon nitride, suitable for preparing the metasurface.

In some embodiments, each of the plurality of micro-nano structural units may include a nanopillar structure, and the nanopillar structure may include but is not limited to a regular-pillar structure such as a nanocylinder structure or a nano-square pillar structure. In some embodiments, an orthographic projection of the nanopillar structure on the substrate may be a C4 rotational symmetry pattern. Herein, the term "C4 rotational symmetry pattern" means that the orthographic projection of the C4 rotational symmetry pattern may overlap with an original pattern by rotating around the center point by 90 degrees. Clearly, the orthographic projection of the nanocylinder structure or the nano-square pillar structure on the substrate is a typical example of the C4 rotational symmetry pattern.

To better understand how the metasurface used as the collimation and refraction unit is designed, the following uses the nanocylinder structure as an example to describe how to design the nanocylinder structure to prepare the metasurface.

First, it should be understood that collimation and refraction of the metasurface to the light beam depend on phase distribution of the metasurface. As described above, the metasurface may include the plurality of micro-nano structural units. Therefore, the phase distribution of the metasurface varies with structural parameters of micro-nano structural units at different locations.

It may be understood that, because a location of each sub-pixel is a specific location, phase distribution of each metasurface corresponding to each sub-pixel is specific distribution. In some embodiments, the phase distribution of each metasurface may be expressed by using the following formula:

$$\varphi(x, y, \lambda) = \frac{2\pi}{\lambda}\left(f - \sqrt{x^2 + y^2 + f^2}\right) + \frac{2\pi}{\lambda}(x \cdot cos\alpha + y \cdot sin\alpha) \cdot sin\theta \qquad (1)$$

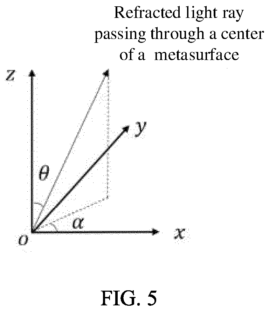

$\varphi(x, y, \lambda)$ is a phase variation amount provided by any point on the metasurface corresponding to each sub-pixel; x and y are coordinate values of centers of micro-nano structural units located at different locations by using a center point of each metasurface as an origin; an x-axis and a y-axis are defined as being parallel to a horizontal direction and a vertical direction of a screen of the three-dimensional display device respectively, and a z-axis is defined as being perpendicular to the screen; and λ is a center wavelength of the light beam emitted by the sub-pixel, f is the height of the stop unit, θ is a refraction angle of a light ray that exits from the metasurface, and α is an angle by which a projection of a refracted light ray passing through the origin on a plane of the metasurface needs to rotate clockwise to coincide with the x-axis. For better clarity, FIG. 5 is a geometrical diagram of a parameter related to the phase distribution of the foregoing metasurface according to an example embodiment of the present disclosure.

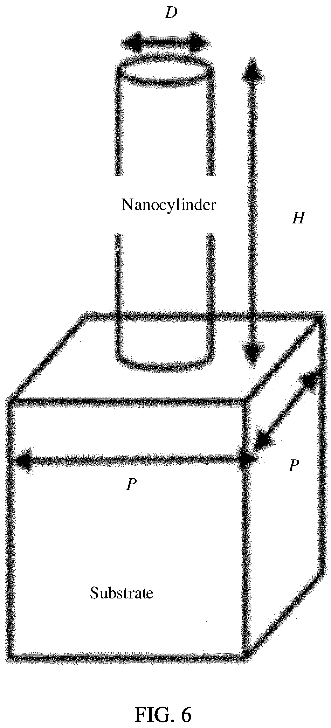

By way of example only, in an example in which the micro-nano structural unit is a nanocylinder structure, a structural parameter of the nanocylinder structure may be described by, for example, a spacing (or period) P, a height H, and a diameter D. The spacing P may be defined as a distance between cylinder center lines of two adjacent nanocylinder structures. In some embodiments, the spacing P between the micro-nano structural units may be constant, that is, the micro-nano structural units may be periodically arranged. FIG. 6 is diagram of a structural parameter of a micro-nano structural unit that is a nanocylinder structure with a substrate according to an example embodiment of the present disclosure. It should be noted that for ease of description, an example in which micro-nano structural units are periodically arranged is used herein. In this case, a substrate of the metasurface may be divided into a plurality of squares, and each nanocylinder structure may correspondingly have one square substrate. In this case, the spacing P between the nanocylinder structures may be described by using a side length of the square substrate instead.

In some embodiments, the spacing between the micro-nano structural units may be selected to be not greater than 400 nm, for example, less than a wavelength of visible light (for example, red light, green light, or blue light), for example, 350 nm, 300 nm, 250 nm, or 200 nm.

As a non-limiting example of a size design of the nanocylinder structure, for example, the diameter D may be selected as a variable, and another parameter (for example, the spacing P and the height H) is used as a fixed amount, to obtain a structure library of a phase and the diameter of the nanocylinder structure through simulation. Then, a diameter of a corresponding nanocylinder may be selected from the structure library based on a phase corresponding to a specific location (which may be represented by coordinates of x and y) of each metasurface expressed based on the foregoing formula (1). In general, to facilitate selection of an appropriate diameter of a nanocylinder from the structure library, simulation is usually required, so that a phase variation range corresponding to the diameter of the nanocylinder can cover 0 to $2\pi$. As an example, for the wavelength of the visible light, a diameter dimension of the nanocylinder structure may be selected, for example, from a range of 50 nm to 400 nm.

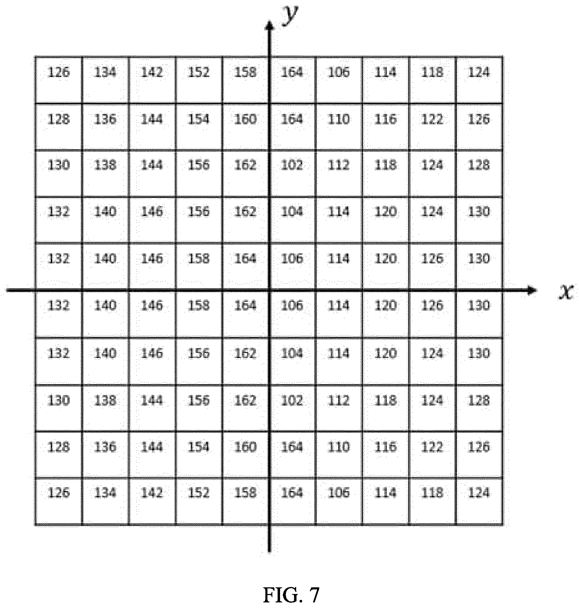

For example, for a blue sub-pixel with a single sub-pixel size of $6.4 \times 6.4$ $\mu$m and a wavelength of 451 nm, it may be assumed that a size of a corresponding metasurface is $6 \times 6$ $\mu$m, a refraction angle $\theta$ is 10°, $\alpha$ is 0°, a height f of a stop unit is equal to 17.17 $\mu$m, and parameters of the nanocylinder structure are H that is equal to 600 nm and a spacing P that is equal to 250 nm. In this case, a corresponding phase and diameter structure library may be obtained through simulation. Then, a corresponding range of a diameter of a nanocylinder may be obtained from the structure library based on the phase distribution that is calculated based on the foregoing formula (1), and the range may be, for example, 100 nm to 164 nm. To be specific, for the spacing P that is equal to 250 nm, the diameter of the nanocylinder in each range of $250 \times 250$ nm varies between 100 nm and 164 nm in the $6 \times 6$ $\mu m$ range of the metasurface. By way of example only, FIG. 7 is a diagram of diameter distribution of a nanocylinder structure within $10 \times 10$ micro-nano structural units near a center point of a metasurface for a blue sub-pixel according to an example embodiment of the present disclosure.

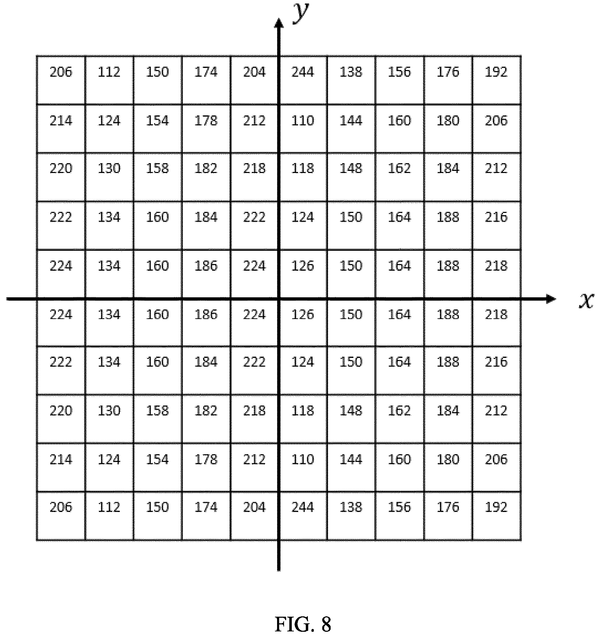

For another example, for a green sub-pixel with a single sub-pixel size of $6.4 \times 6.4$ $\mu$m and a wavelength of 526 nm, it may be assumed that a size of a corresponding metasurface is $6 \times 6$ $\mu$m, a refraction angle 0 is 10°, $\alpha$ is 0°, a height f of a stop unit is equal to 17.17 $\mu$m, and parameters of the nanocylinder structure are H that is equal to 600 nm and P that is equal to 300 nm. In this case, a corresponding phase and diameter structure library may be obtained through simulation. Then, a corresponding range of a diameter of a nanocylinder is obtained from the structure library based on the phase distribution that is calculated based on the foregoing formula (1), and the range may be, for example, 100 nm to 246 nm. To be specific, for the spacing P that is equal to 300 nm, the diameter of the nanocylinder in each range of $300 \times 300$ nm varies between 100 nm and 246 nm in the $6 \times 6$ $\mu m$ range of the metasurface. By way of example only, FIG. 8 is a diagram of diameter distribution of a nanocylinder structure within $10 \times 10$ micro-nano structural units near a center point of a metasurface for a green sub-pixel according to an example embodiment of the present disclosure.

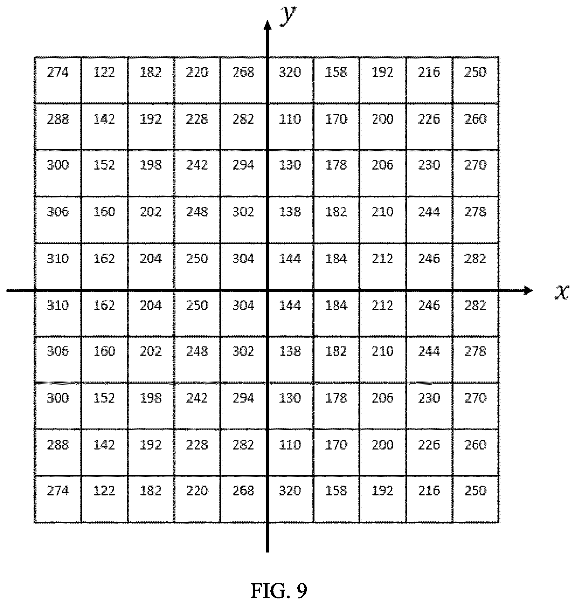

For another example, for a red sub-pixel with a single sub-pixel size of $6.4 \times 6.4$ $\mu$m and a wavelength of 633 nm, it may be assumed that a size of a corresponding metasurface is $6 \times 6$ $\mu$m, a refraction angle 0 is 10°, $\alpha$ is 0°, a height f of a stop unit is equal to 17.17 $\mu$m, and parameters of the nanocylinder structure are H that is equal to 600 nm and P that is equal to 350 nm. In this case, a corresponding structure library may be obtained through simulation. Then, a corresponding range of a diameter of a nanocylinder may be obtained from the structure library based on the phase distribution that is calculated based on the foregoing formula (1), and the range may be, for example, 100 nm to 320 nm. To be specific, for the spacing P that is equal to 350 nm, the diameter of the nanocylinder in each range of $350 \times 350$ nm varies between 100 nm and 320 nm in the $6 \times 6$ $\mu m$ range of the metasurface. By way of example only, FIG. 9 is a diagram of diameter distribution of a nanocylinder structure within $10 \times 10$ micro-nano structural units near a center point of a metasurface for a red sub-pixel according to an example embodiment of the present disclosure.

Although the nanocylinder structure is used as an example above to describe a design idea of the metasurface, it should be understood that a metasurface with another type of nanopillar structure may be designed in a similar manner. However, the metasurface with the nanocylinder structure may be more advantageous than the another type of nanopillar structure, because the nanocylinder structure is non-polarized and a design of the size of the nanocylinder structure is simpler.

Application of the combination of the collimation and refraction unit and the stop unit in the three-dimensional display device has been described in detail above. It may be understood that the combination may enable the three-dimensional display device to be lighter and thinner without using a conventional collimation backlight structure. Particularly, in an embodiment in which the collimation and refraction unit includes the metasurface, the foregoing combination may further make a thickness of the three-dimensional display device lighter and thinner, a design freedom of the viewpoint is greater (which helps control a viewpoint density and a viewpoint range more flexibly), crosstalk is smaller, and a depth of field is larger, thereby improving 3D display effect. In addition, the combination of the metasurface and the stop unit can also eliminate a jump, of the view area, caused by the conventionally used lens as a refraction element, to having anti-peeping effect and avoid a reverse vision phenomenon.

It may be further understood that the present disclosure is not limited to application of the combination of the collimation and refraction unit and the stop unit in the three-dimensional display device. In another implementation, a combination of a refraction unit (which may include the collimation and refraction unit) and the stop unit may be provided as a part of a beam shaping structure. In this case, the beam shaping structure may be a part of an optical apparatus, and the optical apparatus may include but is not limited to the three-dimensional display device.

For example, in this implementation, the beam shaping structure may include: a pixel-level light source; a stop unit, where the stop unit is disposed above the pixel-level light source, and is configured to limit a divergence angle of a light beam emitted from the pixel-level light source; and a collimation and refraction unit, where the collimation and refraction unit is disposed above the stop unit, and is configured to collimate and refract the light beam limited by the stop unit. Particularly, in some embodiments in which light beam collimation is not required, the beam shaping structure may further include: a pixel-level light source; a stop unit, where the stop unit is disposed above the pixel-level light source, and is configured to limit a divergence angle of a light beam emitted from the pixel-level light source; and a refraction unit, where the refraction unit is disposed above the stop unit, and is configured to refract the light beam whose divergence angle is limited.

It may be understood that, both the collimation and refraction unit and the refraction unit may be further metasurfaces, because the metasurfaces may perform functions of at least one of collimation and refraction. It should be noted that the term "pixel-level light source" above should be understood as a light source of a pixel size or magnitude, and includes but is not limited to a pixel or a sub-pixel from an image source.

It should be further understood that, the stop unit and the collimation and refraction unit of the beam shaping structure are respectively the same as the stop unit in the stop unit array and the collimation and refraction unit in the collimation and refraction array described in the three-dimensional display device. Therefore, for specific implementations of the stop unit and the collimation and refraction unit in the beam shaping structure and advantages or technical effect of the combination of the stop unit and the collimation and refraction unit, refer to related descriptions of the three-dimensional display device. The refraction unit may be designed with reference to the collimation and refraction unit for adaptive adjustment, and Therefore details are not described herein again.

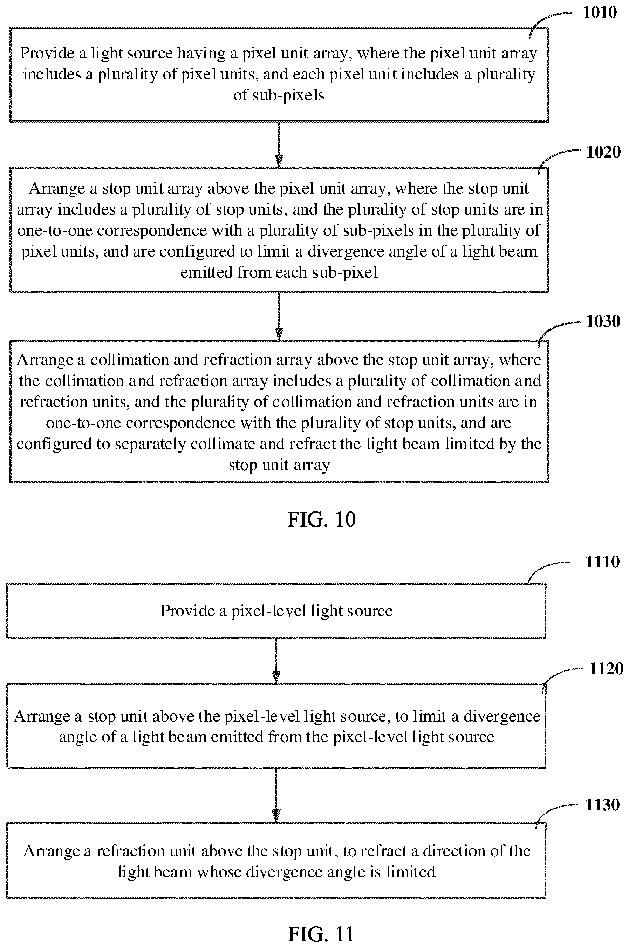

The following briefly describes a flowchart of a method for preparing the foregoing three-dimensional display device according to the present disclosure with reference to FIG. 10.

As shown in FIG. 10, the method may include the following steps. At a block 1010, provide a light source having a pixel unit array, where the pixel unit array includes a plurality of pixel units, and each pixel unit includes a plurality of sub-pixels.

For example, the light source may include but is not limited to a micro light-emitting diode (micro-LED), a liquid crystal display (LCD), or an organic light-emitting diode (OLED).

In some embodiments, the plurality of sub-pixels in each pixel unit may include a blue sub-pixel, a red sub-pixel, and a green sub-pixel. In some other embodiments, the plurality of sub-pixels in each pixel unit may include a monochrome pixel, to provide monochrome three-dimensional display effect.

At a block 1020, arrange a stop unit array above the pixel unit array, where the stop unit array includes a plurality of stop units, and the plurality of stop units are in one-to-one correspondence with a plurality of sub-pixels in the plurality of pixel units, and are configured to limit a divergence angle of a light beam emitted from each sub-pixel.

In some embodiments, the stop unit array may be made of a material with a light absorption characteristic. However, this is not a limitation. In another embodiment, it is also possible that the stop unit array is made of a reflective material. As an example, the stop unit array may be made of a light-absorbing photoresist. For example, the foregoing stop unit array may be formed above the pixel unit array in an etching manner.

To facilitate collimation and refraction of a downstream collimation and refraction unit, in some embodiments, a height of each stop unit may be designed to enable an angle at which a light ray emitted from a center point of each sub-pixel exits along a highest point of a corresponding stop unit to be not greater than a predetermined value, for example, not greater than 20°, 15°, or 10°. In this way, a strict constraint may be imposed on the divergence angle of the light beam emitted from each stop unit.

At a block 1030, arrange a collimation and refraction array above the stop unit array, where the collimation and refraction array includes a plurality of collimation and refraction units, and the plurality of collimation and refraction units are in one-to-one correspondence with the plurality of stop units, and are configured to separately collimate and refract the corresponding light beam whose divergence angle is limited. Particularly, each collimation and refraction unit may be a metasurface, and the metasurface includes a plurality of micro-nano structural units formed on a substrate.

In an embodiment in which each collimation and refraction unit is a metasurface, each of the plurality of micro-nano structural units includes a nanopillar structure. Particularly, an orthographic projection of the nanopillar structure on the substrate may be a C4 rotational symmetry pattern. More particularly, the nanopillar structure may include a nanocylinder structure and a nano-square pillar structure.

In some embodiments, a spacing between the plurality of micro-nano structural units is constant, and may be selected to be less than 400 nm, for example, less than a wavelength of visible light (for example, red light, green light, or blue light), for example, 350 nm, 300 nm, 250 nm, or 200 nm.

In an embodiment in which the nanopillar structural unit is a nanocylinder structure, a diameter dimension of the nanocylinder structure may be selected from a range of 50 nm to 400 nm.

The following briefly describes a flowchart of a method for preparing the foregoing beam shaping structure according to the present disclosure with reference to FIG. 11.

As shown in FIG. 11, at a block 1110, a pixel-level light source is provided. Herein, it should be understood that the term "pixel-level light source" is a light source of a pixel size or magnitude, and includes but is not limited to a pixel or a sub-pixel from an image source. It should also be understood that in this embodiment of the beam shaping structure, the pixel-level light source herein does not have to provide information about an image.

At a block 1120, a stop unit is arranged above the pixel-level light source, to limit a divergence angle of a light beam emitted from the pixel-level light source.

Similarly, the stop unit may be made of a light-absorbing material. However, this is not a limitation. In another embodiment, it is also possible that the stop unit is made of a reflective material. As an example, the stop unit may be made of a light-absorbing photoresist. During preparation, for example, the foregoing stop unit may be formed above the pixel-level light source in an etching manner.

At a block 1130, a refraction unit is arranged above the stop unit, to refract the light beam limited by the stop unit to a predetermined direction.

In some embodiments, the foregoing refraction unit is a collimation and refraction unit. In some other embodiments, the refraction unit may also be a metasurface, and the metasurface may include a micro-nano structural unit array formed on the substrate. In some embodiments, a micro-nano structural unit in the micro-nano structural unit array may include a nanopillar structure. Particularly, an orthographic projection of the nanopillar structure on the substrate may be a C4 rotational symmetry pattern. As an example, the nanopillar structure may include a nanocylinder structure and a nano-square pillar structure.

In some embodiments, depending on a wavelength of light used by application (which may include but is not limited to visible light), a spacing between the plurality of micro-nano structural units is constant, and may be selected to be less than the wavelength of the used light, for example, 700 nm, 600 nm, 500 nm, 350 nm, 300 nm, 250 nm, or 200 nm.

Particularly, when the light used by application is visible, and the nanopillar structural unit is a nanocylinder structure, a diameter dimension of the nanocylinder structure may be selected from, for example, a range of 50 nm to 400 nm.

Although the present invention has been illustrated and described in detail in the accompanying drawings and the foregoing descriptions, such illustrations and descriptions should be regarded to be illustrative or examples rather than limiting. The present invention is not limited to the disclosed embodiments. Other variations of the disclosed embodiments are understood and practiced by a person skilled in the art from a study of the accompanying drawings, the present disclosure, and the appended claims in practicing the claimed invention.

In addition, it should be understood that the methods, steps, or processes described above are merely examples. Although the specification describes the steps of the method in a particular order, this does not require or imply that the operations need to be performed in the particular order, or that all of the shown operations need to be performed to achieve a desired result, rather, the described steps may change the order of execution. Additionally or alternatively, some steps may be omitted, a plurality of steps may be combined into one step for execution, and/or one step may be broken down into a plurality of steps for execution.

In the claims, the word "comprise" does not exclude other elements, and the indefinite article "a" or "one" does not exclude a plurality. A single element or other units may fulfill functions of a plurality of items described in the claims. The mere fact that some features are only described in mutually different embodiments or dependent claims does not mean that a combination of these features cannot be advantageously used. Without departing from the spirit and scope of this application, the protection scope of this application covers any possible combination of features disclosed in various embodiments or dependent claims.

Any reference numeral in the claims should not be construed as limiting the scope of the present disclosure.

**Claims**

1. A three-dimensional display device, comprising:

   a light source, having a pixel unit array comprising a plurality of pixel units, wherein each of the plurality of pixel units comprises a plurality of sub-pixels;

a stop unit array, comprising a plurality of stop units, wherein the plurality of stop units are in one-to-one correspondence with a plurality of sub-pixels in the plurality of pixel units, and are configured to limit a divergence angle of a light beam emitted from each sub-pixel; and

a collimation and refraction array, comprising a plurality of collimation and refraction units, wherein the plurality of collimation and refraction units are in one-to-one correspondence with the plurality of stop units, and are configured to collimate and refract the light beam limited by the stop unit array.

2. The three-dimensional display device according to claim 1, wherein each collimation and refraction unit is a metasurface, and the metasurface comprises a plurality of micro-nano structural units formed on a substrate.

3. The three-dimensional display device according to claim 2, wherein each micro-nano structural unit comprises a nanopillar structure.

4. The three-dimensional display device according to claim 2, wherein a spacing between the plurality of micro-nano structural units is less than 400 nm.

5. The three-dimensional display device according to claim 3, wherein when the nanopillar structure is a nanocylinder structure, a diameter dimension of the nanocylinder structure is in a range of 50 nm to 400 nm.

6. The three-dimensional display device according to claim 1, wherein the plurality of sub-pixels comprise a blue sub-pixel, a red sub-pixel, and a green sub-pixel.

7. The three-dimensional display device according to any one of claims 1 to 6, wherein the collimation and refraction array is designed to separately collimate light rays emitted by the plurality of sub-pixels in each pixel unit and refract the light rays to different directions, wherein the different directions correspond to different viewpoints of the three-dimensional display device.

8. The three-dimensional display device according to any one of claims 2 to 5, wherein a material for preparing the micro-nano structural unit comprises titanium oxide and silicon nitride.

9. The three-dimensional display device according to any one of claims 1 to 6, wherein a height of each stop unit is designed to enable an angle at which a light ray emitted from a center point of each sub-pixel exits along a highest point of a corresponding stop unit to be not greater than 20°.

10. The three-dimensional display device according to any one of claims 1 to 6, wherein the stop unit array is made of a material with a light absorption characteristic.

11. The three-dimensional display device according to any one of claims 1 to 6, wherein the light source comprises a micro light-emitting diode, a liquid crystal display, or an organic light-emitting diode.

12. A beam shaping structure, comprising:

a pixel-level light source;

a stop unit, wherein the stop unit is disposed above the pixel-level light source, and is configured to limit a divergence angle of a light beam emitted from the pixel-level light source; and

a refraction unit, wherein the refraction unit is disposed above the stop unit, and is configured to refract the light beam limited by the stop unit.

13. The beam shaping structure according to claim 12, wherein a height of the stop unit is designed to enable an angle at which a light ray emitted from the pixel-level light source exits along a highest point of the stop unit to be not greater than 20°.

14. The beam shaping structure according to claim 12, wherein the refraction unit is a metasurface, and the metasurface comprises a plurality of micro-nano structural units formed on a substrate.

15. The beam shaping structure according to claim 14, wherein each micro-nano structural unit comprises a nanocylinder structure.

**EP 4 621 480 A1**

16. The beam shaping structure according to claim 14, wherein a spacing between the plurality of micro-nano structural units is less than 400 nm.

17. The beam shaping structure according to claim 14, wherein the pixel-level light source is a pixel or a sub-pixel from an image source.

18. The beam shaping structure according to any one of claims 12 to 17, wherein the stop unit array is made of a material with a light absorption characteristic.

19. An optical apparatus, comprising the beam shaping structure according to any one of claims 12 to 18.

20. The optical apparatus according to claim 19, wherein the optical apparatus is a three-dimensional display device.

**11**

FIG. 1

FIG. 2

FIG. 3

Sub-pixels of each pixel unit have m rows and n columns in total, and m· n=N (quantity of viewpoints). Herein, as an example, each pixel unit may include 15 pixels, and each pixel includes three sub-pixels: red, green, and blue. Therefore, N=45

FIG. 4

Refracted light ray
passing through a center
of a metasurface

FIG. 5

FIG. 6

FIG. 7

| 206 | 112 | 150 | 174 | 204 | 244 | 138 | 156 | 176 | 192 |
| 214 | 124 | 154 | 178 | 212 | 110 | 144 | 160 | 180 | 206 |
| 220 | 130 | 158 | 182 | 218 | 118 | 148 | 162 | 184 | 212 |
| 222 | 134 | 160 | 184 | 222 | 124 | 150 | 164 | 188 | 216 |
| 224 | 134 | 160 | 186 | 224 | 126 | 150 | 164 | 188 | 218 |
| 224 | 134 | 160 | 186 | 224 | 126 | 150 | 164 | 188 | 218 |
| 222 | 134 | 160 | 184 | 222 | 124 | 150 | 164 | 188 | 216 |
| 220 | 130 | 158 | 182 | 218 | 118 | 148 | 162 | 184 | 212 |
| 214 | 124 | 154 | 178 | 212 | 110 | 144 | 160 | 180 | 206 |
| 206 | 112 | 150 | 174 | 204 | 244 | 138 | 156 | 176 | 192 |

FIG. 8

| 274 | 122 | 182 | 220 | 268 | 320 | 158 | 192 | 216 | 250 |
| 288 | 142 | 192 | 228 | 282 | 110 | 170 | 200 | 226 | 260 |
| 300 | 152 | 198 | 242 | 294 | 130 | 178 | 206 | 230 | 270 |
| 306 | 160 | 202 | 248 | 302 | 138 | 182 | 210 | 244 | 278 |
| 310 | 162 | 204 | 250 | 304 | 144 | 184 | 212 | 246 | 282 |
| 310 | 162 | 204 | 250 | 304 | 144 | 184 | 212 | 246 | 282 |
| 306 | 160 | 202 | 248 | 302 | 138 | 182 | 210 | 244 | 278 |
| 300 | 152 | 198 | 242 | 294 | 130 | 178 | 206 | 230 | 270 |
| 288 | 142 | 192 | 228 | 282 | 110 | 170 | 200 | 226 | 260 |
| 274 | 122 | 182 | 220 | 268 | 320 | 158 | 192 | 216 | 250 |

FIG. 9

1010

Provide a light source having a pixel unit array, where the pixel unit array includes a plurality of pixel units, and each pixel unit includes a plurality of sub-pixels

1020

Arrange a stop unit array above the pixel unit array, where the stop unit array includes a plurality of stop units, and the plurality of stop units are in one-to-one correspondence with a plurality of sub-pixels in the plurality of pixel units, and are configured to limit a divergence angle of a light beam emitted from each sub-pixel

1030

Arrange a collimation and refraction array above the stop unit array, where the collimation and refraction array includes a plurality of collimation and refraction units, and the plurality of collimation and refraction units are in one-to-one correspondence with the plurality of stop units, and are configured to separately collimate and refract the light beam limited by the stop unit array

FIG. 10

1110

Provide a pixel-level light source

1120

Arrange a stop unit above the pixel-level light source, to limit a divergence angle of a light beam emitted from the pixel-level light source

1130

Arrange a refraction unit above the stop unit, to refract a direction of the light beam whose divergence angle is limited

FIG. 11

## INTERNATIONAL SEARCH REPORT

| International application No. |
|---|
| **PCT/CN2022/137735** |

**A. CLASSIFICATION OF SUBJECT MATTER**

G02B30/27(2020.01)i; H04N13/302(2018.01)i

According to International Patent Classification (IPC) or to both national classification and IPC

**B. FIELDS SEARCHED**

Minimum documentation searched (classification system followed by classification symbols)

IPC: G02B, H01L, H04N, H10K

Documentation searched other than minimum documentation to the extent that such documents are included in the fields searched

Electronic data base consulted during the international search (name of data base and, where practicable, search terms used)

CNTXT, ENTXTC, ENTXT, VEN: 三维显示, 3D, 光束, 朗伯, 发散角, 超表面, 超构表面, 像素, 子像素, 发光二极管, 光阑, 孔径结构, 准直, 偏折, three-dimensional, stereo, beam, Lambert+, divergence angle, divergent angle, metasurface, metalens+, superstructure, ultra-surface, LED, OLED, LCD, pixel, subpixel, diaphragm, aperture, deflect+, collimat+

**C. DOCUMENTS CONSIDERED TO BE RELEVANT**

| Category* | Citation of document, with indication, where appropriate, of the relevant passages | Relevant to claim No. |
|---|---|---|
| Y | US 2022059803 A1 (APPLIED MATERIALS INC.) 24 February 2022 (2022-02-24) description, paragraphs 2 and 26-83, and figures 1A-6B | 1-20 |
| Y | CN 101281298 A (ZHEJIANG UNIVERSITY) 08 October 2008 (2008-10-08) description, pages 3-5, and figures 1-5 | 1-20 |
| Y | CN 113835233 A (SUN YAT-SEN UNIVERSITY) 24 December 2021 (2021-12-24) description, paragraphs 2 and 37-43, and figures 1-2 | 1-20 |
| A | WO 2022051971 A1 (HUAWEI TECHNOLOGIES CO., LTD.) 17 March 2022 (2022-03-17) entire document | 1-20 |
| A | CN 113471390 A (BOE TECHNOLOGY GROUP CO., LTD.) 01 October 2021 (2021-10-01) entire document | 1-20 |
| A | CN 113130716 A (BOE TECHNOLOGY GROUP CO., LTD.) 16 July 2021 (2021-07-16) entire document | 1-20 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 June 2023** | **15 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 621 480 A1

## INTERNATIONAL SEARCH REPORT

International application No.

**PCT/CN2022/137735**

### C.    DOCUMENTS CONSIDERED TO BE RELEVANT

| Category* | Citation of document, with indication, where appropriate, of the relevant passages | Relevant to claim No. |
|---|---|---|
| A | CN 111261662 A (KUNSHAN NEW FLAT PANEL DISPLAY TECHNOLOGY CENTER CO., LTD. et al.) 09 June 2020 (2020-06-09)<br>entire document | 1-20 |
| A | CN 111653659 A (HUBEI UNIVERSITY) 11 September 2020 (2020-09-11)<br>entire document | 1-20 |
| A | US 2022239883 A1 (WONG HERMAN) 28 July 2022 (2022-07-28)<br>entire document | 1-20 |

Form PCT/ISA/210 (second sheet) (July 2022)

21

## INTERNATIONAL SEARCH REPORT
### Information on patent family members

| International application No. |
|---|
| **PCT/CN2022/137735** |

| Patent document cited in search report | | | Publication date (day/month/year) | Patent family member(s) | | | Publication date (day/month/year) |
|---|---|---|---|---|---|---|---|
| US | 2022059803 | A1 | 24 February 2022 | KR | 20230051568 | A | 18 April 2023 |
| | | | | WO | 2022039971 | A1 | 24 February 2022 |
| | | | | TW | 202224228 | A | 16 June 2022 |
| | | | | CN | 115997488 | A | 21 April 2023 |
| CN | 101281298 | A | 08 October 2008 | US | 2011199373 | A1 | 18 August 2011 |
| | | | | US | 8698966 | B2 | 15 April 2014 |
| | | | | WO | 2009127089 | A1 | 22 October 2009 |
| CN | 113835233 | A | 24 December 2021 | | None | | |
| WO | 2022051971 | A1 | 17 March 2022 | | None | | |
| CN | 113471390 | A | 01 October 2021 | | None | | |
| CN | 113130716 | A | 16 July 2021 | | None | | |
| CN | 111261662 | A | 09 June 2020 | | None | | |
| CN | 111653659 | A | 11 September 2020 | | None | | |
| US | 2022239883 | A1 | 28 July 2022 | WO | 2022160521 | A1 | 04 August 2022 |
| | | | | US | 11477427 | B2 | 18 October 2022 |

Form PCT/ISA/210 (patent family annex) (July 2022)